# EUROPEAN PATENT SPECIFICATION

(11) **EP 1 282 899 B1**
(45) Date of publication and mention of the grant of the patent: **14.07.2004**
(21) Application number: 01931661.1
(22) Date of filing: 27.04.2001
(51) Int. Cl.: G11B 20/00

(54) **COPY PROTECTION SYSTEM**
KOPIERSCHUTZSYSTEM
SYSTEME DE PROTECTION DE COPIE

(30) Priority: 10.05.2000 EP 00201669
(43) Date of publication of application: 12.02.2003
(73) Proprietor: Koninklijke Philips Electronics N.V., 5621 BA Eindhoven (NL)
(72) Inventor: TALSTRA, Johan, C., NL-5656 AA Eindhoven (NL); MAES, Maurice, J., J., J-B., NL-5656 AA Eindhoven (NL); HOLLMANN, Hendrik, D., L., NL-5656 AA Eindhoven (NL); VAN DIJK, Marten, E., NL-5656 AA Eindhoven (NL)
(74) Representative: Deguelle, Wilhelmus Hendrikus Gerardus
(86) International application number: PCT/EP2001/004768
(87) International publication number: WO 2001/086650

(56) References cited:
- EP-A- 0 969 463
- WO-A-97/43853
- WO-A-99/11020
- LINNARTZ J-P, DEPOVERE G, KALKER T: "Philips Electronics-Response to call for proposals issued by the Data Hiding Subgroup CPTWG" PUB. NAT.LAB WY 8, PHILIPS RESEARCH, 8 October 1999 (1999-10-08), pages 1-41, XP002118336 Eindhoven

## Description

The invention relates to an apparatus for reading out information from an information carrier, the information including at least a first signal of at least partly encrypted content, to an apparatus for storing such information as well as to corresponding methods. The invention relates further to an information carrier, to a method of exchanging copy protection information and to a copy protection system.

Films released on DVD are protected from being copied by the so-called Content Scrambling System (CSS) encryption method, well known to a person skilled in the art. In the future, additional protection methods such as digital watermarking will be added. With the imminent introduction of recordable and rewritable DVD formats into the consumer-market, there is also the need of so called "play control" which ensures that certain copy protection rules are checked. One of these rules is the following: CSS encrypted content on a recordable disc should be refused. This rule has been specified in the CSS-license, but has not been substantiated in its technical realisation. In other words, although all DVD-player manufacturers should obey this rule per the CSS-license, there is no clear way to implement this. The invention disclosed here presents such a realisation.

In order to implement this rule, recordable discs have to be distinguished from pre-recorded discs, e.g. DVD-ROM discs. There are two ways of approaching this problem:
- Recognise all recordable formats (present and future) (e.g. pre-groove detection). This method is technically simple but seriously flawed from a security point of view. There is an incentive for recordable disc manufacturers to continually attempting to modify their recordable media in such a way that players (not recorders) recognise them as
- ROM discs, so as to circumvent the CSS-rule. New players would have to recognise those new discs as well, i.e. an arms race.
- Introduce a physical disc mark for DVD-ROM discs which cannot be reproduced by consumers on recordable discs e.g. ROM-wobble as disclosed in US 5,737,286. This wobble is a (small) radial variation of the spiral made up by pits and lands and recorded in phase. This wobble can be detected in a player from the Differential Phase Detection (DPD)-radial servo-tracking signal, present in the drive servo mechanism. The discs upon which such a wobble is detected are marked pre-recorded, whereas discs without a wobble are marked recordable. In this way, the wobble can be used for distinguishing pre-recorded discs from recordable discs.

In the second solution, for additional security, the proposed ROM-wobble can have a payload, which is (cryptographically) tied to the content, e.g. by using the payload in the watermark. This is where the wobble shows its real strength. The wobble could also be tied to CSS, which has the added bonus of providing an upgrade path.

The problem with introducing the ROM-wobble is the presence of legacy ROM-discs with CSS content that do not have the wobble. I.e. there are two types of discs without a wobble: i) recordable or rewriteable discs which should be rejected when comprising protected content, e.g. CSS protected content, ii) legacy pre-recorded discs which should be played back (even when comprising (CSS) protected content).

WO 97/43853 A discloses a method and apparatus for copyright protection for various optical recording media such as Digital Video Discs (DVDs) and magnetic tape cassette systems, such as W-VHS, which use a combination of a Copyright Signature Signal and an Authenticating Signature to permit the player to handle either copy-protected or non-copy-protected media, in a manner that is difficult to compromise. Both a Copyright Signature Signal and an Authenticating Signature are recorded on the media only when copy-protection is required. The nature of this Authenticating Signature is such that it will not be transferred to illicit copies made on recorders. When either an original protected or an original non-protected medium is played, the presence or absence of the Authenticating Signature causes the player to correctly play the program video. All original media therefore play normally. When a copy of a non-protected medium is played, the absence of the Copyright Signature Signal also causes the player to correctly play back the video signal data. However, when a copy of a protected disc or cassette is played, the absence of the Authenticating Signature causes the recorder or player to prohibit the medium from playing normally.

It is therefore an object of the present invention to provide a solution to the above mentioned problem, i.e. to provide a solution of implementing the CSS rule for information carriers including at least a first signal of at least partly encrypted content.

This object is achieved by an apparatus for reading out information from an information carrier as claimed in claim 1, an apparatus for storing such information as claimed in claim 10, corresponding methods as claimed in claim 9 and 11, an information carrier as claimed in claim 12, a method of exchanging copy protection information as claimed in claim 13 and a copy protection system as claimed in claim 14.

According to the invention in the content on "new" discs there will be a second signal, which may also be called "trigger". This trigger has the following requirements:
- It should be easily detectable from looking just at the content
- It should not be easily removable by a hacker
- It should not affect content preparation.

Previous solutions did not meet all of the above criteria. Watermarks embedded in the video are not easily detectable: the content is CSS-encrypted, and checking for the watermark requires decryption, which is typically expensive in a DVD-drive. An alternative watermark method on the level of the MPEG stream (so called PTY marks) is easily detected, but is not acceptable from the viewpoint that the impact on content preparation should be low. Straightforward methods of setting a few bits in the CSS encrypted content are easily hacked.

According to the invention a second signal is logically embedded in the first signal. If this second signal is detected on the information carrier it is indicated that a physical mark has been used by a recording apparatus, e.g. by the mastering machine, for storing at least part of the information on the information carrier. If such a physical mark will then not be found on the information carrier then the information carrier may constitute an illegal copy.

The invention has one system aspect and one implementation aspect. The system aspect is that there is (A) an information carrier with a special (physical) mark and (B) content on that carrier (first signal) containing a second signal (the trigger). The (copy-protection) system rule is that players should only play back content in two cases: (i) there is no trigger/second signal in the content and (ii) content which has a trigger/second signal, resides on a carrier WITH physical mark. A carrier without physical mark and WITH second signal in the content is illegal.

The implementation aspect of this invention is a practical choice for the second signal (the trigger). The problem that is solved is that of storing a second signal into (audio/video) content, on the "logical level", not on the "physical" level. This second signal observes the following constraints:
(i) The second signal should be "hard" to remove by a (malicious) user. The applied measure of "hard" is that for the trigger to be removed, the user has to be able to (CSS-) decrypt the video. Normally a pirate wouldn't be able to do that, because he doesn't have the proper key. It is not enough to encode the second signal in a single bit, like the copy bit on CDs, as sold in the store. If it is '1', the CD may be copied, if it is '0' is may not be copied. Such a bit can be easily manipulated in a computer, as evidenced by the fact that so many people copy CDs to CD-R.
(ii) The second signal should be backwards compatible: i.e. a disk with the signal, should be playable on an old existing DVD-player that doesn't know about second signals. This is not trivial because e.g. the DVD-Video format defines pretty much every bit in the video file. There is no way to stuff information into the video file itself. Otherwise the player will show "hick-ups" on the screen.
(iii) It should be possible to determine the presence of the second signal without actually (CSS)-decrypting the content. This is not trivial because as a simple way to satisfy (i), it has been suggested to have the recorder include the second signal into the music/video and then encrypt the whole thing. Then by definition it satisfies (i), but not (iii), because the player, especially when it is a PC-drive, needs to have access to the decryption keys to check for presence of the second signal.
(iv) It does not require a major overhaul of the content preparation process (like writing completely new disk formatting software).

In a preferred embodiment of the invention the apparatus is provided for reading information from an optical record carrier like a CD or a DVD, i. e. the apparatus is a CD- or DVD-player.

In another embodiment of the invention the second signal is embedded in the first signal by encoding it in a predetermined pattern of encrypted and unencrypted packs of the first signal. CSS-encrypted content is typically decrypted both in hardware (in tabletop DVD-players) and software (in PCs). Software decryption slows down the PC substantially, and seriously degrades the viewing quality of a DVD-film. To ameliorate this situation, only a limited fraction of the video stream has been encrypted in a DVD-mastering facility. The stream is divided into so called packs of 2 Kbytes each, and typically somewhere between 10-50% of the packs have been encrypted.

According to this embodiment of the invention a message for the purpose of copy protection may be transmitted by the deliberately encrypting packs following a certain pattern. As an example, encrypt the packs according to the rule:
u-u-u-e-e-u-u-u-e-e-u-u-u-e-e-u-u-u-e-e-.... to transmit a '0' message, and
u-u-u-u-e-e-u-u-u-u-e-e-u-u-u-u-e-e-....
to transmit a '1' bit, where 'u' stands for an unencrypted pack, and 'e' for an encrypted one. For a hacker to remove these messages (which would be interpreted by a DVD-player in accordance with the purpose of this embodiment to expect an appropriate disc-mark like the wobble) he would need to decrypt CSS and re-encrypt it; decryption is not enough, because the watermark can be detected in clear content. The particular manner to encode information in the pattern of encrypted/unencrypted packs should be sufficiently exotic that it has an extremely low probability of having occurred in DVD encoded in the past. Therefore something like pseudo-random noise patterns of u's and e's would be more suitable.

Advantageous further developments thereof are claimed in further dependent claims. Because the number of encrypted and unencrypted packs per second is not equal (the number of 'u"s is usually quite larger than 'e"s to facilitate DVD-playback in software) the aforementioned pseudo-random patterns would have to be biased somehow. The standard manner to cheaply construct a pseudo-random noise sequence is the LFSR (linear feedback shift register), which is defined by a so-called irreducible (primitive) generator polynomial of a finite field GF(p^{q}), where q is the length of the LFSR, and p is prime or the power of a prime. It is common to choose p = 2. However to create a biased pseudo-random sequence with bias 1/s (i.e. out of every s packs, s-1 are unencrypted and 1 is encrypted), with s prime, the polynomial should be chosen over GF(s). The output of the LFSR is then a random sequence of elements 1ᵢ of GF(s): 0, 1, 2, ..., s-1. If every 1ᵢ is replaced by 'u' if 1ᵢ ≥ 1, and by 'e' if 1ᵢ = 0, otherwise, a recipe to encrypt the packs with the required bias is obtained. This principle can be generalized to pseudo-random sequences with bias 1/s, where s is not just prime, but the power of a prime. In an embodiment the linear feedback shift register is over Galois field GF(s) and its output is biased by interpreting emitted symbols '0' ... 's-n-1'as 'unencrypted' and 's-n'... 's-1' as 'encrypted'.

In an alternative embodiment of the invention the second signal is embedded in the first signal by selecting a key for at least partly encrypting the information from one of at least two groups of keys. As an example the keys used to encrypt the content are 40 bits long. Another embodiment of the invention consists of designing a detection algorithm, i.e. a function operating on the key K:→ f(K), where f(K) can be 0 or 1. f( ) should be chosen in such a way that when operating on the keys used in the DVD-titles published so far (on the order of 4000 keys), it always yields 0. The way to enforce the CSS-rule would then be that a player reads the disc key K, computes f(K), and if the result is 0, it knows that no second signal, e.g. no wobble, is necessary (because the key must belong to a movie published in a time when the second signal was not required yet). If the result however is '1', then the player must also check for a second signal. If there is no second signal, the disc is an illegal copy of CSS-encrypted material on a recordable, or illegitimately mastered ROM disc.

After introduction of this system, the implication for the publishers is that before encrypting a movie with key K, they would check whether f(K)=1 when they want second signal protection, e.g. wobble protection, for their content, and f(K)=0 when they don't. If the key K doesn't have the appropriate properties, a new random K needs to be chosen. In practice this is not a problem, because disc-keys are distributed by a single licensing organisation the "DVD_ CCA", located in California.

For this reason a preferred selection of f( ) that it is 0 on one half of all possible keys and 1 on the other half; in that case on average no more than 2 tries are needed to find a suitable K. There is an additional reason to require f( ) to have this property: f( ) would be built into DVD-players and would therefore potentially be known publicly. It would be undesirable if the keys of all past 4000 DVD titles could be derived from knowing f( ) alone. It will be explained how such a function can be constructed from a given set of 4000 arbitrary keys. The conclusion is that f( ) is surprisingly simple a) to compute and b) to implement. Implementation requires storage of approximately 64 40-bit (non-confidential) constants, and computation requires seven 40-bit XOR operations plus shift register.

In a preferred embodiment of the invention the decoding algorithm used for decoding from which group of keys a certain key has been selected consists of examining the outcome of projecting an n-bit key onto a set of fixed n-bit numbers.

The invention has as an important advantage that the second signal (the "wobble trigger") does not need decryption and watermark detection. This is accomplished by embedding the second signal, used to distinguish new media on which information is stored using a physical mark from legacy discs, in the encryption instead of in the watermark.

The invention has as additional advantages:
- Wobbled discs play on legacy players;
- The encrypted content on wobbled discs contains a secure wobble trigger which is hard to remove;
- Legacy discs play on new players, because the wobble trigger is not present, so the player will not check on the existence of a wobble. As a result the wobbled discs and the not-wobbled discs can co-exist;
- The wobble provided an optional extra level of security;
- The wobble works with CPPM (Copy Protection for Pre-recorded Media; the copy protection scheme for DVD-Audio) or CSS;
- Wobble detection in the drive requires limited hardware cost (5000-6000 gates).

Although the design of the invention as outlined above has been specifically triggered by problems in the DVD arena, it is conceivable that the invention has a much wider range of applications. E.g. a revocation scheme could be based on this. A player would have the general structure of the function f( ) on board, but it would load the constants dynamically.

The invention refers also to a method of reading out information, to an apparatus for storing information, to a method of storing information, to an information carrier for storing information, to a method of exchanging copy protection information and to a copy protection system as claimed in further independent claims. It shall be understood that these devices and methods can be developed further and can have further embodiments identical or similar to those which have been described above and which are laid down in the dependent claims of claim 1.

The invention shall now be explained in more detail with reference to the figures, in which
Fig. 1 shows a block diagram of an apparatus for reading out information from an information carrier according to the invention,
Fig. 2 shows a block diagram of such an apparatus according to the invention,
Fig. 3 shows the steps of a method for reading information according to the invention,
Fig. 4 shows a first embodiment of a linear feedback shift register used according to the invention,
Fig. 5 shows a second embodiment of a linear feedback shift register according to the invention,
Fig. 6 shows a flow chart explaining another embodiment of the invention, and
Fig. 7 shows a block diagram of a copy protection system according to the invention.

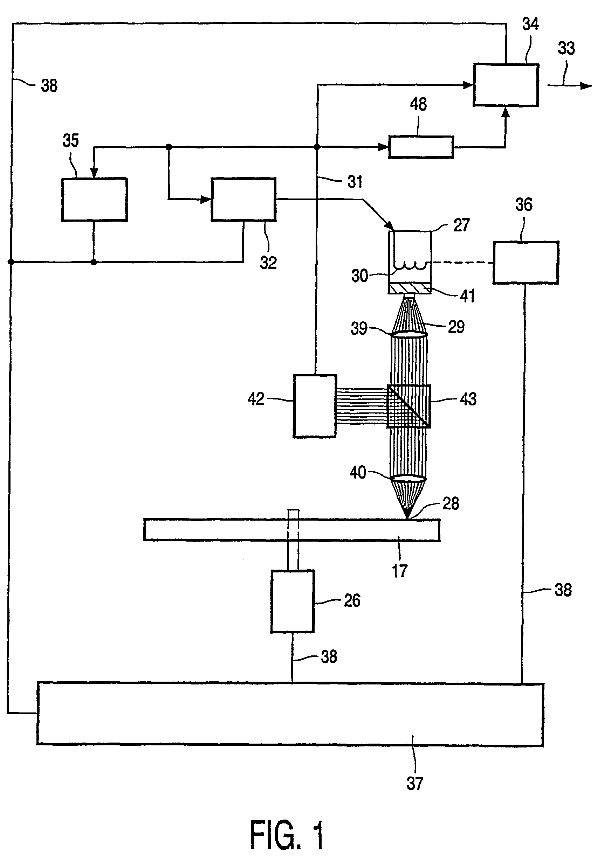

Figure 1 shows an apparatus according to the invention for reading of the information carrier 17. The apparatus comprises driving means 26 for rotating the information carrier 17 and a read head 27 for reading out the tracks present on the information carrier. The read head 27 comprises an optical system of a known type to focus a light spot 28 on a track by means of a beam of light 29 guided through optical elements like a collimator lens 39, to collimate the beam of light and an objective lens, to focus the beam of light. This beam of light 29 originates from a radiation source 41, e.g. an infrared laser diode with a wavelength of 650 nm and an optical output of 1 mW. The read head 27 further comprises a tracking actuator for fine-positioning the light spot 28 in the radial direction in the middle of the track. Adjusting the position of the light spot to the position of the track can also be achieved be changing the position of the objective lens 40.

After being reflected by the information carrier 17, the beam of light 29 is detected by a detector 42 of a known type, e.g. a quadrant detector generates detector signals 31 including a read signal, a tracking-error signal, focussing-error signal, synchronisation signal and lock-in signal. E.g. a beam splitting cube 43, a polarising beam splitting cube, a pellicle or a retarder can be used for this. The apparatus further comprises tracking means 32 connected to the read head 27 for receiving the tracking-error signal of the read head 27 and for steering the tracking actuator 30. During reading out the information carrier 17 the reading-out signal is converted in the read out means 34 into output information 33 the read out means for example comprising a channel decoder or an error-corrector. The apparatus further comprises an address detector 35 for retrieving the addresses from the detector signals 31 and positioning means 36 for coarse positioning the read head 27 in de radial direction of the track. The apparatus further comprises detection means 48 for receiving the detector signals 31 from the read head 27. The detector signals 31 are used by the detection means 48 for synchronising the read out means 34. The apparatus further comprises a system control unit 37 for receiving commands of a controlling computer system or a user and for regulating the apparatus by means of control lines 38, e.g. a system bus connected to the driving means 26, the positioning means 36, the address detector 35, the tracking means 32 and the read out means 34.

In this apparatus for reading out information from an information carrier a check is performed which results in a possible refusal to play back the information carrier if a predefined condition, substantially as described above, is not matched.

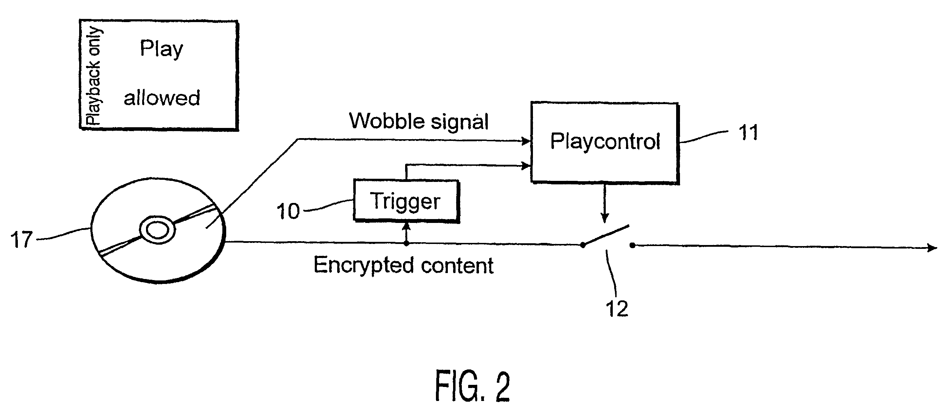

Figure 2 shows simply block diagram of a playback apparatus according to the invention. Therein the encrypted content read from a disc 17 is transferred to a trigger checking unit 10 where it is checked if a trigger, i. e. a second signal is embedded in the encrypted content. The result of this check is provided to a play control unit 11. In parallel a wobble signal, if detected on the disc 17, is also provided to the play control unit 11. According to these two inputs the play control unit 11 decides if the encrypted content read from the disc 17 shall be released for playback or not.

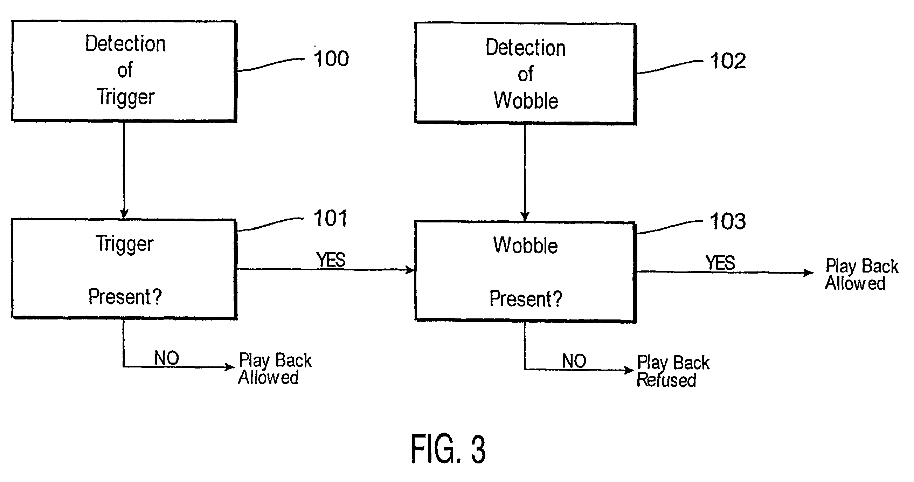

In Figure 3 the steps of the method of reading out information from an information carrier according to the invention are shown. In a first step 100 it is checked if a trigger is present. In a first decision step 101 it is then decided based on the result of the first step 100 if a playback of the read information is allowed (no trigger present) or a wobble needs to be present (trigger present) if playback shall be allowed. In the latter case it is checked in step 102 if a wobble is present. If this is the case then playback is allowed (step 103). If no wobble is present then playback of the read information is refused.

With reference to Figures 2 and 3, the following checks can occur in a play back apparatus according to the invention (it must be noted that a legacy disc is a pre-recorded disc comprising encrypted content, a wobbled disc is a pre-recorded disc comprising a wobble, a legacy drive is an old compliant drive, a new drive is a new compliant drive):
- legacy drive + legacy disc → pass;
- legacy drive + wobbled disc → pass (the "old" legacy drive doesn't see the disc-mark, i.e. the wobble, but doesn't notice the wobble trigger either);
- new drive + legacy disc → pass (the new drive doesn't find the disc-mark on the old disc, but no wobble trigger either);
- new drive + wobbled disc → pass (the new drive finds the wobble trigger and also finds the wobble; as an option, to further strengthen the copy protection scheme, the payload of the wobble can be detected and checked);
- new drive + non-legacy disc → fail (the new drive finds the wobble trigger, but doesn't find the wobble, necessary for playing the content on the disc).

Some encryption schemes (like CSS) do not encrypt the entire stream that they attempt to protect e.g. for performance reasons. The choice to encrypt only say 50% of the content represents a trade-off between de/encryption-effort and security offered. In general the content is divided into blocks, which can also be called "sectors" or "packs". If the recorder encrypts only 50% of the sectors, it still has the freedom to choose which sectors to encrypt. For existing schemes this happens following a regular pattern (one encrypted, one in-the-clear, one encrypted etc.) for 50% or (one encrypted, two in-the-clear, one encrypted, two in- the-clear, etc.) for 33%. By defining a fixed non-standard encryption pattern, say (e.g. 11100100, where '1'=encrypted, '0'=in-the-clear) repeated over and over, a second signal, e.g. a wobble trigger, can be inserted which observed the above mentioned constraints. Thus in a partially encrypted stream it is possible to transmit a message (the second signal or trigger) by using the redundancy in the choice of which sectors (blocks, packs) of that stream to encrypt.

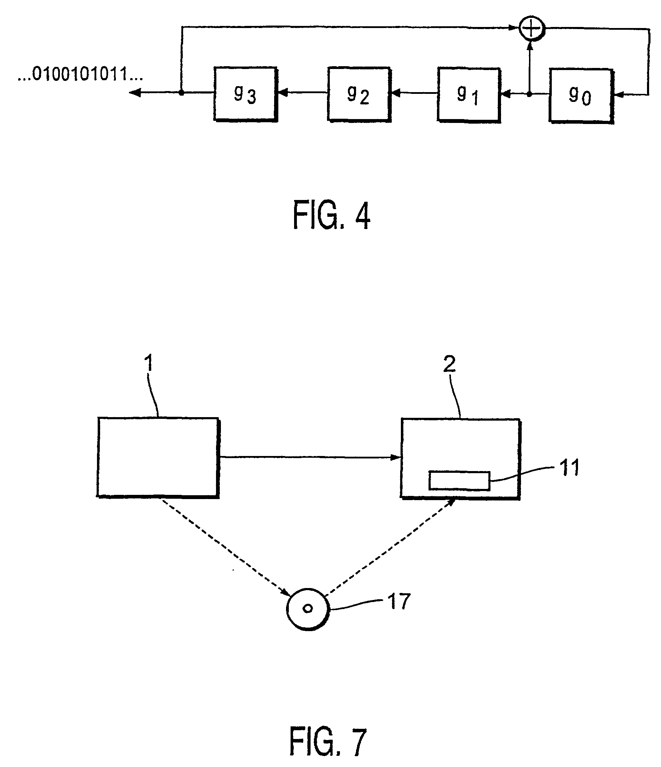

Figure 4 shows a block diagram of a linear feedback shift register (LFSR) for generating a predetermined pattern to be used for encrypting certain packs of the first signal according to the invention. This LFSR has length four, but in practical cases it would have a length ~ 16...32. The numbers in the four boxes g₀ - g₃ are taken from GF(p), the field of order p (p can be prime or a power of a prime number). In the following, it will be constrained to p=prime, the most relevant, but there is no need to constrain it in general. In the case of p=prime GF(p) is just the set {0,1,2,...p-1}. The fact that this set is called a field, refers to the fact that when two numbers from GF₍ₚ₎ are multiplied, added, subtracted etc., the final result is always reduced modulo p. E.g. if p=5 it results in 4*3=2 (because 4*3=12 = 2*5+2 = 2 modulo 5). This is then called a shift-register of length four over GF(p). The simplest LFSR is over GF(2), in which case g₀...g₃ are just 0 or 1, i.e. bits, and addition (modulo 2) is just the boolean XOR-operation.

The purpose of the LFSR is to produce a stream of random bits {g₀..g₃} output 11011011110000101... etc. To do this some initial choice is made for g₀ - g₃, e.g. g₃=1 g₂=0, g₁=0, g₀= 1. This is called the "seed" of the LFSR. Then the LFSR is "clocked" which means the content of a box is moved to the one to the left of it. The leftmost box g₃ is the "output" of the LFSR. The new value of g₀, i.e. the new content of the rightmost box is equal to g₃+g₀ (the old values) = 1+1 =0 (it is calculated modulo 2). Now {g₃,..g₀}={0,0,1,0}, and the output is '1'. The set of boxes that participate in the calculation of the new g₀ (here the 0th and the 3rd box) are called the "taps" of the LFSR. For every time the LFSR is clocked a new random bit is received. Thus a '1001000..' is created:

| g₃..g₀ | output |
|---|---|
| 1001 | |
| 0010 | 1 |
| 0100 | 0 |
| 1000 | 0 |
| 0001 | 1 |
| 0011 | 0 |
| 0111 | 0 |
| 1111 | 0 |
| .... | |

This kind of LFSR has advantageous properties, e.g. on average it puts out as many 0's as 1's.

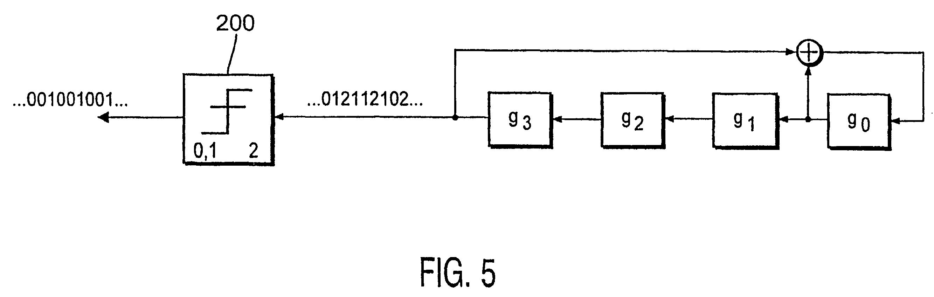

Another embodiment of a LFSR is shown in Figure 5. Therein p=3 is selected. This LFSR works exactly the same except for the calculation of the new go. Since now GF(3) is used, the addition g₀+g₃ has now to be done modulo 3. If it is started out with {g₃..g₀}={2,1,0,2}, the output '2' is got next and new g₀ = old g₃+ old g₀ = 2+2=1 (mod3)-> {g₃..g₀}={1,0,2,1 }. The output '2102122..' is produced as follows:

| g₃..g₀ | output |
|---|---|
| 2102 | |
| 1021 | 2 |
| 0212 | 1 |
| 2122 | 0 |
| 1221 | 2 |
| 2212 | 1 |
| 2121 | 2 |
| 1210 | 2 |
| ... | |

This is again an advantageous LFSR in the sense that roughly 1/3 of the output is '0's, 1/3 is '1's and 1/3 is '2's. Either '0' or '1' coming out can now be interpreted as a binary 0, and a '2' coming out can be interpreted as a binary '1'. This interpretation can be done in a mapping unit 200. In other words: if a '0' or '1' comes out the pack of the first signal remains 'unencrypted' and is stored unencrypted on the information carrier, if a '2' comes out the pack of the first signal is 'encrypted' and then stored encrypted on the information carrier. Because of this rule, this LFSR emits 2/3 '0's and 1/3 '1's. For other values of p the outputs 0,1,...,p-2 are mapped to '0' (unencrypted) and p-1 to are mapped to '1' (encrypted) causing a fraction (p-1)/p '0's coming out and a fraction 1/p '1's. It is obvious that it is possible to also produce fractions k/p by choosing an LFSR over GF₍ₚ₎ and interpreting the symbols '0', '1', ..., 'p-k-1' coming out to mean 'unencrypted' and symbols 'p-k',..., 'p-1' to mean encrypted. Depending on the precise primitive feedback polynomial chosen in Fig. 5, some of the taps may also involve a multiplication by a fixed element from GF(s).

Another possiblity for a transmitter and a receiver to exchange a second signal hidden in an encrypted stream (first signal) is by using the freedom in the choice of the encryption key. The problem is if a random set of keys K={K₀,....,Kₙ} has already been used in the past, the transmitter wants to make sure the receiver doesn't consider keys from "K" to accidentally contain the second signal. Thus according to the invention a system is proposed where transmitter and receiver agree upon a box or function f(K) that (a) produces "no second signal present" when supplied with keys from K and (b) "second-signal-present" or "no second-signal-present" both with approximately 50% probability on all remaining keys. Additionnally, an efficient implementation of the function or box f(K) which satisfies (a) or (b) and an efficient algorithm for computing such a function or constructing such a box from the knowledge of {K₁....Kₙ} are provided.

The derivation of the function f is based on a mathematical result that can be stated roughly as follows. If X is a collection of m-bit keys, of size n, say, then there exists an m-bit number a such that if the collection X is partitioned into two parts according to the value of the parity of the XOR of elements from X with a, then each of the parts contains about half of the elements of X. If a is chosen at random, then for each e>1, the probability that the sizes of both parts differ from n/2 by at most e . sqrt(n) is at least 1/(1-e). Also, if n<m, then there is an a such that the XOR of a with all elements from X is 0.

Using this result, a function f can be constructed such that the evaluation of f(K) can be arranged in the form of a binary decision-tree of depth d with d approximately equal to log(n) - log(m), where log0 denotes the base-2 logarithm. Here, in each node v of the decision-tree, the m-bit XOR of K is computed with the m-bit number a(v) corresponding to this node; the result of this XOR determines which of the two branches from v will be followed. The value of f(K) will be the computed XOR-value at the end-node that is reached after d steps.

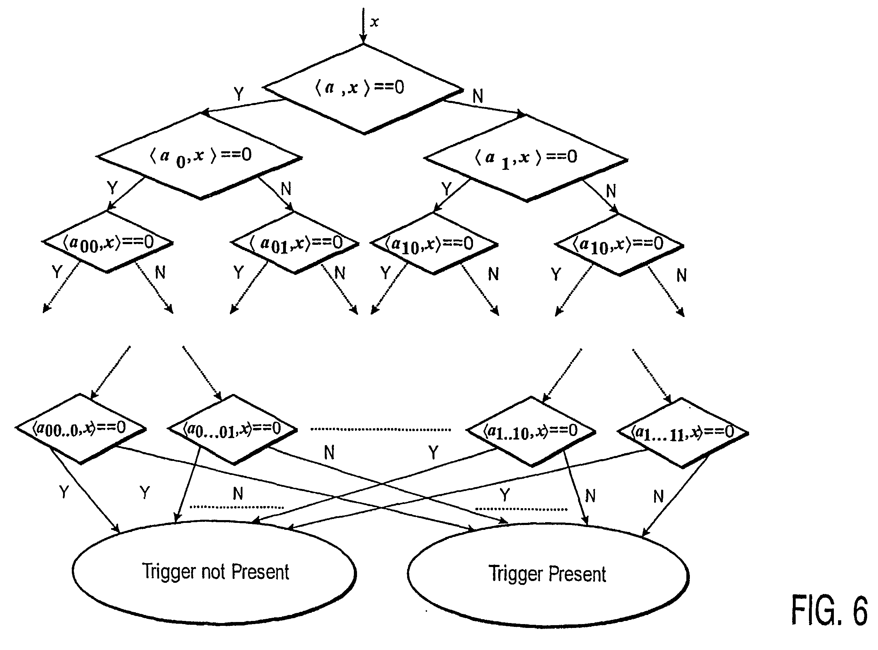

Such a decision-tree is shown in Figure 6. It is suggested to interpret say a 40-bit key 'x' as a 40-dimensional vector of which the co-ordinates can only be 0 or 1. The set of N-dimensional vectors with {0,1} co-ordinates is well known in discrete mathematics as GF(2)^{N} (just like the linear field described above, but now p is a power of 2). Like normal vectors it is still possible to compute the normal inner product as long as the calculation is done modulo 2. Say N=4 (not 40) and a=(1,1,1,1) and x=(1,1,1,0). Then <a,x> = 1*1+1*1+1*1+1*0 = 3 = 1 modulo 2. In general <a,x> can only be 0 or 1 (because of the calculation modulo 2), i.e. a is perpendicular to x (0) or not perpendicular (1). If vector a is fixed and x is run through all 2⁴=16 possible vectors in GF(2⁴) it is found that exactly 1/2 of them are perpendicular to a (<a,x>=0) and half are not perpendicular (<a,x>=1). In the tree of Figure 6 there are different a's at the nodes of the tree. At the beginning <a,x> is computed. If the outcome is 0, one goes left, otherwise right. Say one has to go left. At the next node <a₀,x> is computed. Say one has to go right. Then <a₀₁,x> is computed etc. until the bottom nodes are hit. If the outcome at the last node is '1' this can be interpreted as "trigger-present" otherwise as "trigger-absent" message. Although for this implementation of function fall keys are drawn from GF(2)^{N} and computations are done in GF(2) (i. e. calculate modulo 2), it is clear that this can be straightforwardly generalized to keys interpreted as elements of, or drawn from GF(q)^{N}, and computations done in GF(q), where q is a prime power (e. g. a power of 2).

Already many keys have been used. It is therefore preferred to make sure that using such a key as value of 'x' in this tree does not accidentally end up at the last node with a '1', because that would make an old disk look like it has a trigger (which it cannot have, since at manufacture time such triggers were not used).

In the above practical case, it holds that n = 4000 and m=40, so that d is about 7. The decision- tree will contain 2^{d}-1, so about 127, nodes, which means that about 127 40-bit numbers a have to be stored while an evaluation of f will require about d = 7 m-bit XOR's

A copy protection system according to the invention is shown in Figure 7. Therein an apparatus 1 for storing information on an information carrier 17 is shown which stores the information according to the method as described above using a first and a second signal. Further, an apparatus 2 for reading out information from the information carrier 17 is shown which comprises means for detecting the first and second signal and a physical mark as described above. It further comprises means 11 for refusing playback of the information read from the information carrier if a second signal but no physical mark has been detected. According to the invention the information regarding the second signal, i. e. the information which second signal is used and how this second signal is logically embedded in the first signal is transmitted from the apparatus 1 for storing the information to the apparatus 2 for reading out the information so that the apparatus 2 for reading out the information can correctly detect the second signal.

It must be noted that the invention as described above is not limited to the embodiments explained. For example, the invention is not only related to DVD ROM-discs, but to all pre-recorded media in general. Further, the invention is not only related to a wobble, but to all physical disc marks, which can be used for distinguishing pre-recorded discs from recordable discs. Further, the invention is not only related to CSS, but to all encryption schemes. Further, the invention is not only related to the triggers as described above, but related to all triggers obeying the following conditions: i) detection of the trigger is possible without decrypting the content, ii) the trigger can not be removed without decrypting the content.

## Claims

1. An apparatus for reading out information from an information carrier (17), the information including at least a first signal of at least partly encrypted content, comprising:
- means (10; 100) for detecting a second signal logically embedded in the first signal,
- means (102) for detecting a physical mark, and
- means (11) for refusing play back of the information read from the information carrier if the second signal but no physical mark has been detected, the
**characterized in that**
said means (10; 100) for detecting a second signal are adapted for detecting a second signal which is embedded in the first signal by encoding it in a predetermined pattern of encrypted and unencrypted packs of the first signal, and
said means (102) for detecting a physical mark are adapted for detecting a physical mark which is used for storing on the information carrier at least a part of said information.

2. An apparatus according to claim 1, wherein the pattern is a pseudo-random noise pattern.

3. An apparatus according to claim 2, wherein the pseudo-random noise pattern is constructed by a linear feedback shift register.

4. An apparatus according to claim 3, wherein the linear feedback shift register is over Galois Field GF(s), and its output is biased by interpreting emitted symbols '0'...'s-n-1' as 'unencrypted' and 's-n'...'s-1' as 'encrypted'.

5. An apparatus according to claim 1, wherein the second signal is embedded in the first signal by selecting a key for at least partly encrypting the information from one of at least two groups of keys.

6. An apparatus according to claim 5, wherein a key detection algorithm is used to select the key and to decode from which group of keys said key has been selected.

7. Apparatus of claim 6, wherein the decoding algorithm consists of examining the outcome of projecting an n-bit key onto a set of fixed n-bit numbers.

8. Apparatus of claim 7, wherein said examining process takes the form of going down a binary tree, where said going left is caused by projection-value 0 and right by projection value non-zero.

9. A method of reading out information from an information carrier (17), the information including at least a first signal of at least partly encrypted content, comprising the steps of:
- detecting (100) a second signal logically embedded in the first signal,
- detecting (102) a physical mark, and
- refusing play back of the information read from the information carrier if the second signal but no physical mark has been detected,
**characterized in that**
the second signal is embedded in the first signal by encoding it in a predetermined pattern of encrypted and unencrypted packs of the first signal, and
the physical mark is used for storing on the information carrier at least a part of said information.

10. An apparatus for storing information on an information carrier (17), the information including at least a first signal of at least partly encrypted content, comprising:
- means for using a physical mark, and
- means for logically embedding a second signal in the first signal indicating that a physical mark is used, which second signal may be used for refusing play back of the information read from the information carrier if the second signal but no physical mark has been detected,
**characterized in that**
said means for logically embedding a second signal in the first signal are adapted for embedding the second signal in the first signal by encoding it in a predetermined pattern of encrypted and unencrypted packs of the first signal, and
said means for using a physical mark are adapted for using a physical mark for storing on the information carrier at least a part of said information.

11. A method of storing information on an information carrier (17), the information including at least a first signal of at least partly encrypted content, comprising the steps of:
- using a physical mark, and
- logically embedding a second signal in the first signal indicating that a physical mark is used, which second signal may be used for refusing play back of the information read from the information carrier if the second signal but no physical mark has been detected,
**characterized in that**
the second signal is logically embedded in the first signal by encoding it in a predetermined pattern of encrypted and unencrypted packs of the first signal, and
the physical mark is used for storing on the information carrier at least a part of said information.

12. An information carrier (17) storing information including at least a first signal of at least partly encrypted content, comprising:
- a physical mark, and
- a second signal logically embedded in the first signal indicating that a physical mark is used, which second signal may be used for refusing play back of the information read from the information carrier if the second signal but no physical mark has been detected,
**characterized in that**
the second signal is logically embedded in the first signal by encoding it in a predetermined pattern of encrypted and unencrypted packs of the first signal, and
the physical mark is used for storing on the information carrier at least a part of said information.

13. A method of exchanging copy protection information for protecting information stored on an information carrier (17) including at least a first signal of at least partly encrypted content, wherein a physical mark is used, and the copy protection information includes a second signal logically embedded in the first signal indicating that a physical mark is used, which copy protection information may be used for refusing play back of the information read from the information carrier if the second signal but no physical mark has been detected,
**characterized in that**
the second signal is logically embedded in the first signal by encoding it in a predetermined pattern of encrypted and unencrypted packs of the first signal, and
the physical mark is used for storing on the information carrier at least a part of said information.

14. A copy protection system for exchanging copy protection information for protecting information stored on an information carrier (17) including at least a first signal of at least partly encrypted content, comprising:
- an apparatus (1) for storing information on an information carrier as claimed in claim 10 and
- an apparatus (2) for reading out information from an information carrier as claimed in claim 1,
wherein the copy protection information includes a second signal logically embedded in the first signal indicating that a physical mark is used, which copy protection information may be used for refusing play back of the information read from the information carrier if the second signal but no physical mark has been detected,
**characterized in that**
the second signal is logically embedded in the first signal by encoding it in a predetermined pattern of encrypted and unencrypted packs of the first signal, and
the physical mark is used for storing on the information carrier at least a part of said information.

## Patentansprüche

1. Gerät zum Auslesen von Informationen aus einem Informationsträger (17), wobei die Informationen mindestens ein erstes Signal eines zumindest teilweise verschlüsselten Inhalts enthalten, mit:
- Mitteln (10; 100) zum Ermitteln eines zweiten Signals, welches in dem ersten Signal logisch integriert ist,
- Mitteln (102) zum Ermitteln einer physikalischen Markierung, sowie
- Mitteln (11) zur Verweigerung der Wiedergabe der aus dem Informationsträger ausgelesenen Informationen, wenn das zweite Signal, jedoch keine physikalische Markierung ermittelt wurde,
**dadurch gekennzeichnet, dass**
die Mittel (10; 100) zum Ermitteln eines zweiten Signals ein, in dem ersten Signal integriertes, zweites Signal ermitteln können, indem dieses in einem vorgegebenen Muster aus verschlüsselten und unverschlüsselten Paketen des ersten Signals codiert wird, und
die Mittel (102) zur Ermittlung einer physikalischen Markierung eine physikalische Markierung ermitteln können, welche verwendet wird, um auf dem Informationsträger zumindest einen Teil der Informationen zu speichern.

2. Gerät nach Anspruch 1, wobei das Muster ein pseudostatistisches Rauschbild darstellt.

3. Gerät nach Anspruch 2, wobei das pseudostatistische Rauschbild durch ein linear rückgekoppeltes Schieberegister erzeugt wird.

4. Gerät nach Anspruch 3, wobei das linear rückgekoppelte Schieberegister über dem Galois-Feld GF(s) ist und dessen Ausgang durch Interpretieren emittierter Symbole '0' ... 's-n-1' als ,unverschlüsselt' und 's-n' ... 's-1 als 'verschlüsselt' verschoben wird.

5. Gerät nach Anspruch 1, wobei das zweite Signal durch Auswählen eines Schlüssels zum zumindest teilweisen Verschlüsseln der Informationen aus einer der mindestens zwei Schlüsselgruppen in dem ersten Signal integriert wird.

6. Gerät nach Anspruch 5, wobei ein Schlüsselerkennungsalgorithmus eingesetzt wird, um den Schlüssel auszuwählen und zu entschlüsseln, aus welcher Schlüsselgruppe der Schlüssel ausgesucht wurde.

7. Gerät nach Anspruch 6, wobei der Decodierungsalgorithmus sich aus dem Prüfen des Ergebnisses des Projizierens eines n-Bit-Schlüssels auf eine Menge von festen n-Bit-Zahlen zusammensetzt.

8. Gerät nach Anspruch 7, wobei der Prüfungsvorgang in einer Form erfolgt, bei welcher an einem binären Baum hinuntergegangen wird, wobei bei einem Projektionswert 0 nach links und bei einem Projektionswert ungleich Null nach rechts gegangen wird.

9. Methode zum Auslesen von Informationen aus einem Informationsträger (17), wobei die Informationen mindestens ein erstes Signal eines zumindest teilweise verschlüsselten Inhalts enthalten, wonach:
- ein zweites Signal, welches in dem ersten Signal logisch integriert ist, ermittelt wird (100),
- eine physikalische Markierung ermittelt wird (102), und
- die Wiedergabe der von dem Informationssträger abgerufenen Informationen verweigert wird, wenn das zweite Signal, jedoch keine physikalische Markierung ermittelt wurde,
**dadurch gekennzeichnet, dass**
das zweite Signal in dem ersten Signal durch Codieren desselben in einem vorgegebenen Muster aus verschlüsselten und unverschlüsselten Paketen des ersten Signals integriert wird, und
die physikalische Markierung zum Speichern von zumindest einem Teil der Informationen auf dem Informationsträger verwendet wird.

10. Gerät zum Speichern von Informationen auf einem Informationsträger (17),
wobei die Informationen mindestens ein erstes Signal eines zumindest zum Teil verschlüsselten Inhalts enthalten, mit:
- Mitteln zur Verwendung einer physikalischen Markierung sowie
- Mitteln zur logischen Integration eines zweiten Signals in dem ersten Signal unter Hinweis auf die Verwendung einer physikalischen Markierung, wobei das zweite Signal eingesetzt werden kann, um die Wiedergabe der von dem Informationsträger abgerufenen Informationen zu verweigern, wenn das zweite Signal, jedoch keine physikalische Markierung ermittelt wurde,
**dadurch gekennzeichnet, dass**
die Mittel zur logischen Integration eines zweiten Signals in dem ersten Signal das zweite Signal in dem ersten Signal durch Codieren desselben in einem vorgegebenen Muster aus verschlüsselten und unverschlüsselten Paketen des ersten Signals integrieren können, und
die Mittel zur Verwendung einer physikalischen Markierung eine solche zum Speichern von zumindest einem Teil der Informationen auf dem Informationsträger einsetzen können.

11. Methode zum Speichern von Informationen auf einem Informationsträger (17), wobei die Informationen mindestens ein erstes Signal eines zumindest zum Teil verschlüsselten Inhalts enthalten, wonach:
- eine physikalische Markierung verwendet wird und
- ein zweites Signal in dem ersten Signal unter Hinweis, dass eine physikalische Markierung verwendet wird, logisch integriert wird, wobei das zweite Signal eingesetzt werden kann, um die Wiedergabe der von dem Informationsträger abgerufenen Informationen zu verweigern, wenn das zweite Signal, jedoch keine physikalische Markierung ennittelt wurde,
**dadurch gekennzeichnet, dass**
das zweite Signal in dem ersten Signal durch Codieren desselben in einem vorgegebenen Muster aus verschlüsselten und unverschlüsselten Paketen des ersten Signals logisch integriert wird, und
die physikalische Markierung zum Speichern von zumindest einem Teil der Informationen auf dem Informationsträger verwendet wird.

12. Informationsträger (17), welcher Informationen, die mindestens ein erstes Signal eines zumindest teilweise verschlüsselten Inhalts enthalten, speichert, mit:
- einer physikalischen Markierung sowie
- einem zweiten Signal, welches, unter Hinweis darauf, dass eine physikalische Markierung verwendet wird, in dem ersten Signal logisch integriert ist, wobei das zweite Signal eingesetzt werden kann, um die Wiedergabe der von dem Informationsträger abgerufenen Informationen zu verweigern, wenn das zweite Signal, jedoch keine physikalische Markierung ermittelt wurde,
**dadurch gekennzeichnet, dass**
das zweite Signal in dem ersten Signal durch Codieren desselben in einem vorgegebenen Muster aus verschlüsselten und unverschlüsselten Paketen des ersten Signals logisch integriert wird, und
die physikalische Markierung zum Speichern von zumindest einem Teil der Informationen auf dem Informationsträger verwendet wird.

13. Methode zum Austausch von Kopierschutzinformationen, um auf einem Informationsträger (17) gespeicherte Informationen, die mindestens ein erstes Signal eines zumindest zum Teil verschlüsselten Inhalts enthalten, zu schützen, wobei eine physikalische Markierung verwendet wird und die Kopierschutzinformationen ein zweites Signal enthalten, welches in dem ersten Signal unter Hinweis darauf, dass eine physikalische Markierung verwendet wird, logisch integriert ist, wobei die Kopierschutzinformationen eingesetzt werden können, um die Wiedergabe der von dem Informationsträger abgerufenen Informationen zu verweigern, wenn das zweite Signal, jedoch keine physikalische Markierung ermittelt wurde,
**dadurch gekennzeichnet, dass**
das zweite Signal in dem ersten Signal durch Codieren desselben in einem vorgegebenen Muster aus verschlüsselten und unverschlüsselten Paketen des ersten Signals logisch integriert wird, und
die physikalische Markierung zum Speichern von zumindest einem Teil der Informationen auf dem Informationsträger verwendet wird.

14. Kopierschutzsystem zum Austausch von Kopierschutzinformationen, um auf einem Informationsträger (17) gespeicherte Informationen, die mindestens ein erstes Signal eines zumindest zum Teil verschlüsselten Inhalts enthalten, zu schützen, mit:
- einem Gerät (1) zum Speichern von Informationen auf einem Informationsträger, wie in Anspruch 10 beansprucht , sowie
- einem Gerät (2) zum Auslesen von Informationen aus einem Informationsträger, wie in Anspruch 1 beansprucht,
wobei die Kopierschutzinformationen ein zweites Signal enthalten, welches unter Hinweis darauf, dass eine physikalische Markierung verwendet wird, in dem ersten Signal logisch integriert ist, wobei die Kopierschutzinformationen eingesetzt werden können, um die Wiedergabe der von dem Informationsträger abgerufenen Informationen zu verweigern, wenn das zweite Signal, jedoch keine physikalische Markierung ermittelt wurde,
**dadurch gekennzeichnet, dass**
das zweite Signal in dem ersten Signal durch Codieren desselben in einem vorgegebenen Muster aus verschlüsselten und unverschlüsselten Paketen des ersten Signals integriert wird, und
die physikalische Markierung zum Speichern von zumindest einem Teil der Informationen auf dem Informationsträger verwendet wird.

## Revendications

1. Appareil de lecture d'informations depuis un support d'informations (17), les informations contenant au moins un premier signal dont le contenu est au moins partiellement crypté, comprenant :
- des moyens (10 ; 100) pour détecter un deuxième signal incorporé de manière logique au premier signal,
- des moyens (102) pour détecter une marque physique, et
- des moyens (11) pour refuser la reproduction des informations lues depuis le support d'informations si le deuxième signal a été détecté mais pas de marque physique,
**caractérisé en ce que** :
lesdits moyens (10 ; 100) de détection d'un deuxième signal sont aptes à détecter un deuxième signal qui est incorporé au premier signal en le codant selon une séquence prédéterminée de paquets cryptés et non cryptés du premier signal, et
lesdits moyens (102) de détection d'une marque physique sont aptes à détecter une marque physique qui est utilisée pour stocker sur le support d'informations au moins une partie desdites informations.

2. Appareil selon la revendication 1, dans lequel la séquence est une séquence de bruit pseudo-aléatoire.

3. Appareil selon la revendication 2, dans lequel la séquence de bruit pseudo-aléatoire est construite au moyen d'un registre à décalage à rétroaction linéaire.

4. Appareil selon la revendication 3, dans lequel le registre à décalage à rétroaction linéaire est sur un Champ de Galois GF(s), et sa sortie est biaisée en interprétant les symboles émis "0",..., "s-n-1" comme étant "non cryptés" et les symboles "s-n", ..., "s-1" comme étant "cryptés".

5. Appareil selon la revendication 1, dans lequel le deuxième signal est incorporé au premier signal en sélectionnant une clé pour crypter au moins partiellement les informations à partir de l'un d'au moins deux groupes de clés.

6. Appareil selon la revendication 5, dans lequel un algorithme de détection de clé est utilisé pour sélectionner la clé et pour déterminer dans quel groupe de clés ladite clé a été sélectionnée.

7. Appareil selon la revendication 6, dans lequel l'algorithme de décodage consiste à examiner le résultat de la projection d'une clé à n bits sur un ensemble de nombres fixes à n bits.

8. Appareil selon la revendication 7, dans lequel ledit processus d'examen consiste à descendre un arbre binaire, la descente vers la gauche étant provoquée par la valeur de projection 0 et vers la droite par la valeur de projection non nulle.

9. Procédé de lecture d'informations depuis un support d'informations (17), les informations comprenant au moins un premier signal dont le contenu est au moins partiellement crypté, comprenant les étapes de :
- détection (100) d'un deuxième signal incorporé de manière logique au premier signal,
- détection (102) d'une marque physique, et
- refus de reproduire des informations lues depuis le support d'informations si le deuxième signal a été détecté mais pas de marque physique,
**caractérisé en ce que** :
le deuxième signal est incorporé au premier signal en le codant selon une séquence prédéterminée de paquets cryptés et non cryptés du premier signal, et
la marque physique est utilisée pour stocker sur le support d'informations au moins une partie desdites informations.

10. Appareil de stockage d'informations sur un support d'informations (17), les informations comprenant au moins un premier signal dont le contenu est au moins partiellement crypté, comprenant :
- des moyens destinés à utiliser une marque physique, et
- des moyens destinés à incorporer de manière logique un deuxième signal dans le premier signal indiquant qu'une marque physique est utilisée, lequel deuxième signal peut être utilisé pour refuser la reproduction des informations lues depuis le support d'informations si le deuxième signal a été détecté, mais pas de marque physique,
**caractérisé en ce que** :
lesdits moyens destinés à incorporer de manière logique un deuxième signal dans le premier signal sont aptes à incorporer le deuxième signal dans le premier signal en le codant selon une séquence prédéterminée de paquets cryptés et non cryptés du premier signal, et
lesdits moyens d'utilisation d'une marque physique sont aptes à utiliser une marque physique pour stocker sur le support d'informations au moins une partie desdites informations.

11. Procédé de stockage d'informations sur un support d'informations (17), les informations comprenant au moins un premier signal dont le contenu est au moins partiellement crypté, comprenant les étapes de :
- utilisation d'une marque physique, et
- incorporation de manière logique d'un deuxième signal dans le premier signal indiquant qu'une marque physique est utilisée, lequel deuxième signal peut être utilisé pour refuser la reproduction des informations lues depuis le support d'informations si le deuxième signal a été détecté, mais pas de marque physique,
**caractérisé en ce que** :
le deuxième signal est incorporé de manière logique au premier signal en le codant selon une séquence prédéterminée de paquets cryptés et non cryptés du premier signal, et
la marque physique est utilisée pour stocker sur le support d'informations au moins une partie desdites informations.

12. Support d'informations (17) stockant des informations comprenant au moins un premier signal dont le contenu est au moins partiellement crypté, comprenant :
- une marque physique, et
- un deuxième signal incorporé de manière logique au premier signal indiquant qu'une marque physique est utilisée, lequel deuxième signal peut être utilisé pour refuser la reproduction des informations lues depuis le support d'informations si le deuxième signal a été détecté, mais pas de marque physique,
**caractérisé en ce que** :
le deuxième signal est incorporé de manière logique au premier signal en le codant selon une séquence prédéterminée de paquets cryptés et non cryptés du premier signal, et
la marque physique est utilisée pour stocker sur le support d'informations au moins une partie desdites informations.

13. Procédé d'échange d'informations de protection contre la copie pour protéger les informations stockées sur un support d'informations (17) comprenant au moins un premier signal dont le contenu est au moins partiellement crypté, dans lequel une marque physique est utilisée, et les informations de protection contre la copie comprennent un deuxième signal incorporé de manière logique au premier signal indiquant qu'une marque physique est utilisée, lesquelles informations de protection contre la copie peuvent être utilisées pour refuser la reproduction des informations lues depuis le support d'informations si le deuxième signal a été détecté mais pas de marque physique,
**caractérisé en ce que**
le deuxième signal est incorporé de manière logique au premier signal en le codant selon une séquence prédéterminée de paquets cryptés et non cryptés du premier signal, et
la marque physique est utilisée pour stocker sur le support d'informations au moins une partie desdites informations.

14. Système de protection contre la copie pour échanger des informations de protection contre la copie pour protéger des informations stockées sur un support d'informations (17), comprenant au moins un premier signal dont le contenu est au moins partiellement crypté, comprenant :
- un appareil (1) pour stocker des informations sur un support d'informations; selon la revendication 10, et
- un appareil (2) pour lire des informations depuis un support d'informations selon la revendication 1,
dans lequel les informations de protection contre la copie comprennent un deuxième signal incorporé de manière logique au premier signal indiquant qu'une marque physique est utilisée, lesquelles informations de protection contre la copie peuvent être utilisées pour refuser la reproduction des informations lues depuis le support d'informations si le deuxième signal a été détecté mais pas de marque physique,
**caractérisé en ce que** :
le deuxième signal est incorporé de manière logique au premier signal en le codant selon une séquence prédéterminée de paquets cryptés et non cryptés du premier signal, et
la marque physique est utilisée pour stocker sur le support d'informations au moins une partie desdites informations.
